# EUROPÄISCHE PATENTSCHRIFT

(11) **EP 3 298 393 B1**
(45) Veröffentlichungstag und Bekanntmachung des Hinweises auf die Patenterteilung: **23.06.2021**
(21) Anmeldenummer: 16725475.4
(22) Anmeldetag: 20.05.2016
(51) Int. Cl.: G01N 23/20, G01N 23/04, G01B 15/02

(54) **VERFAHREN UND VORRICHTUNG ZUR CHARAKTERISIERUNG DES GEFÜGES EINES BANDS ODER BLECHS AUS METALL**
METHOD AND DEVICE FOR CHARACTERIZING THE MICROSTRUCTURE OF A STRIP OR SHEET OF METAL
PROCÉDÉ ET DISPOSITIF DE CARACTÉRISATION DE LA STRUCTURE D'UNE BANDE OU D'UNE TÔLE DE MÉTAL

(30) Priorität: 21.05.2015 DE 102015108060
(43) Veröffentlichungstag der Anmeldung: 28.03.2018
(73) Patentinhaber: IMS Messsysteme GmbH, 42579 Heiligenhaus (DE)
(72) Erfinder: EIZENHÖFER, Harald, 82229 Seefeld (DE)
(74) Vertreter: Cohausz & Florack
(86) Internationale Anmeldenummer: PCT/EP2016/061407
(87) Internationale Veröffentlichungsnummer: WO 2016/185012

(56) Entgegenhaltungen:
- EP-A2- 0 352 423
- DE-A1- 2 618 906
- DE-A1- 10 345 754
- GB-A- 2 110 367
- US-A- 4 649 556
- HERMANN-J. KOPINECK ET AL: "Industrial on-line texture determination in rolled steel strips", JOURNAL OF NONDESTRUCTIVE EVALUATION., Bd. 12, Nr. 1, 1. März 1993 (1993-03-01), Seiten 13-19, XP055285628, US ISSN: 0195-9298, DOI: 10.1007/BF00565904
- Anmin Yin ET AL: "Textural Through-Thickness Inhomogeneity of Interstitial-Free Steel and Its Influence on Plastic Anisotropy Prediction", MATERIALS TRANSACTIONS, 1. Januar 2014 (2014-01-01), Seiten 1847-1851, XP055286297, Sendai DOI: 10.2320/matertrans.M2014276 Gefunden im Internet: URL:https://www.jstage.jst.go.jp/article/m atertrans/55/12/55_M2014276/_pdf
- KENTARO KAJIWARA ET AL: "Development of visualization method of grain boundaries in stainless steel by using white X-ray micro-beam and image detector", PHYSICA STATUS SOLIDI. A: APPLICATIONS AND MATERIALS SCIENCE, vol. 206, no. 8, 23 June 2009 (2009-06-23) , pages 1838-1841, XP055614036, DE ISSN: 1862-6300, DOI: 10.1002/pssa.200881610

## Beschreibung

Die Erfindung betrifft ein Verfahren zur Charakterisierung des Gefüges eines Bands oder Blechs aus Metall. Die Erfindung betrifft weiter eine Vorrichtung zur Charakterisierung des Gefüges eines Bands oder Blechs aus Metall, insbesondere zur Verwendung in einem erfindungsgemäßen Verfahren.

Zur Charakterisierung des Gefüges eines Bands oder Blechs wird bisher insbesondere ein Schliffbild angefertigt und analysiert. Dazu wird ein Probenstück aus dem Band oder Blech entnommen, geschliffen und geätzt, um das Gefüge sichtbar zu machen. Eine Auswertung erfolgt anschließend unter einem Mikroskop, beispielsweise einem Lichtmikroskop oder Elektronenmikroskop. Obwohl mit diesem Verfahren das Gefüge direkt sichtbar gemacht werden kann, ist die Anfertigung eines Schliffbildes invasiv, d.h. ein Teil der Materialprobe wird durch die Messung zerstört, und auch zeitaufwändig. Ein solches Verfahren lässt sich folglich nicht einfach in einen laufenden Herstellungsprozess eines Bands oder Blechs integrieren.

Ein schnelleres, zerstörungsfreies Verfahren zur Charakterisierung des Gefüges von Metall bietet die Verwendung von Ultraschall-Streuung. Die Ultraschall-Streuung kann zur Erkennung der Korngröße eingesetzt werden, lässt allerdings bezüglich gewisser charakterisierender Eigenschaften des Gefüges nur indirekte oder qualitative Aussagen zu, beispielsweise über Inhomogenitäten im Gefüge. Ultraschall-Streuung kann dabei in die Prozessregelung integriert werden. Die DE 102 56 750 A1 schlägt beispielsweise vor, für das Gefügeverhalten eines Metalls aussagekräftige Werte mit Ultraschallmessgeräten zur Prozessregelung in einer Anlage zur Umformung, Kühlung, und/oder Wärmebehandlung von Metall einzusetzen.

Vor dem Hintergrund der Nachteile der Ultraschall-Streuung ist es wünschenswert, eine komplementäre Charakterisierungsmethode des Gefüges zur Verfügung zu stellen.

Zur Charakterisierung von Werkstoffen wird unter anderem auch Röntgenstrahlung verwendet. Röntgenstrahlung wird beispielsweise für die Dickenmessung von Bändern oder Blechen eingesetzt. Die DE 26 18 906 A1 betrifft eine Durchstrahlungsdickenmessung für die Messung des Profils von Bändern. In der GB 2 110 367 A wird eine Profilmessvorrichtung beschrieben, welche drei Strahlungsquellen und drei korrespondierende Mehrkanaldetektoren umfasst. Die DE 103 45 754 A1 beschäftigt sich mit einer Vorrichtung zur Bestimmung der Dicke bewegter metallischer, bandförmiger Werkstoffe. Ebenso ist es aus dem Stand der Technik bekannt, mit der Streuung von monochromatischer Röntgenstrahlung die Struktur eines Werkstoffs zu analysieren (Röntgendiffraktion und Kristallstrukturanalyse).

In der DE 199 41 736 A1 wird die Verwendung von Röntgenstrahlung zur Prozessführung und Prozessoptimierung beim Warmwalzen von Metall offenbart. Dabei werden die Beugungsintensitäten der Röntgenstrahlung zur Identifizierung der Strukturumwandlung von Stahl ausgewertet. Der Artikel "Industrial On-Line Texture Determination in Rolled Steel Strips" von Kopineck et al. beschäftigt sich mit der Bestimmung von Daten an Bändern über Röntgentransmissionsmessungen. Der Artikel "Textural Through-Thickness Inhomogeneity of Interstitial-Fre Steel and Its Influence on Plastic Anisotropy Prediction" von Yin et al. betrifft ein schnelles Texturmessverfahren für kaltgewalzte Bleche. Die US 4,649,556 A offenbart ein Verfahren und eine Vorrichtung zur Online-Messung und -Kontrolle der Korngröße in Materialien. In der EP 0 352 423 A2 wird eine Vorrichtung zur Texturanalyse beschrieben.

Problematisch an der Röntgendiffraktion ist allerdings, dass diese das Band oder Blech nur punktuell untersucht und die Intensität der Strahlung im industriellen Einsatz üblicherweise eher gering ist.

Der vorliegenden Erfindung liegt die Aufgabe zugrunde, ein verbessertes, alternatives Verfahren und eine Vorrichtung zur Charakterisierung des Gefüges eines Bands oder Blechs aus Metall anzugeben.

Diese Aufgabe wird gemäß einer ersten Lehre der Erfindung erfindungsgemäß durch ein Verfahren zur Charakterisierung des Gefüges eines Bands oder Blechs aus Metall gelöst, bei dem während einer Messung eine Fläche des Bands oder Blechs mit aufgeweiteter Röntgenstrahlung bestrahlt wird, wobei die Fläche eine Größenordnung von mehreren Quadratmillimetern oder mehreren Quadratzentimetern aufweist und wobei die Röntgenstrahlung zumindest teilweise ein kontinuierliches Spektrum aufweist, bei dem das Intensitätsmuster, das eine Vorwärtsstreuung bzw. eine Transmission der Röntgenstrahlung beinhaltet, räumlich aufgelöst gemessen wird, so dass ein räumlich aufgelöstes, über einen Spektralbereich der Röntgenstrahlung integriertes Intensitätsmuster erhalten wird, und bei dem eine von der Fluktuation des gemessenen Intensitätsmusters abhängige Ausgangsgröße zur Beurteilung der Korngröße, Korngrößenverteilung und/oder Kornorientierung bestimmt und ausgegeben wird.

Zur Charakterisierung des Gefüges eines Bands oder Blechs aus Metall wird eine Fläche des Bands oder Blechs mit Röntgenstrahlung bestrahlt. Die bestrahlte Fläche weist eine Größenordnung von mehreren Quadratmillimetern oder von mehreren Quadratzentimetern auf. Die bestrahlte Fläche ist damit nicht annähernd punktförmig wie bei der Röntgendiffraktion.

Die Röntgenstrahlung weist zumindest teilweise ein kontinuierliches Spektrum auf. Das Spektrum ist nicht auf einen sehr engen Spektralbereich begrenzt wie beispielsweise bei monochromatisierter Strahlung. Das zumindest teilweise kontinuierliche Spektrum umfasst insbesondere einen Ausschnitt aus einem Bremsstrahlungsspektrum. Insbesondere wird eine Röntgenquelle verwendet, welche ein kontinuierliches Röntgenspektrum über mehr als 1 keV, bevorzugt über mehr als 10 keV, insbesondere über mehr als 100 keV erzeugt.

Als Röntgenquelle kann eine Röntgenröhre verwendet werden, insbesondere ohne die Vorsehung von Monochromatoren oder anderen, den Spektralbereich beschränkenden Filtern. Die Röntgenröhre kann eine Drehanode umfassen. Die Verwendung einer Röntgenröhre ist besonders einfach, effizient und kostengünstig.

Die Intensität der vom Band oder Blech gestreuten Röntgenstrahlung wird räumlich aufgelöst gemessen, so dass ein räumlich aufgelöstes Intensitätsmuster erhalten wird. Ein räumlich aufgelöstes Intensitätsmuster umfasst die Information über die Intensität der gestreuten Strahlung an zumindest zwei Positionen im Raum. Das räumlich aufgelöste Intensitätsmuster kann beispielsweise durch eine bewegliche Detektoranordnung gemessen werden, wobei die Position der Detektoranordnung variiert wird und an jeder Position eine Intensität gemessen wird. Bevorzugt ist jedoch die Verwendung eines Detektoranordnung mit räumlich beabstandeten Detektorelementen, beispielsweise Pixel, wobei über die Intensitätsverteilung in den verschiedenen Pixeln ein räumlich aufgelöstes Intensitätsmuster erhalten werden kann.

Es wird ein über einen Spektralbereich der Röntgenstrahlung integriertes, räumlich aufgelöstes Intensitätsmuster erhalten. Die Intensitätsmessung erfolgt also insbesondere nicht energieaufgelöst. Auf diese Weise kann zum einen eine einfachere Detektoranordnung verwendet werden und zum anderen kann eine bessere Messstatistik für das Intensitätsmuster erreicht werden.

Während bei einer energieaufgelösten Messung die Intensität der Röntgenstrahlung für eine bestimmte Wellenlänge (bzw. Energie) erfasst wird, tragen zu einem über einen Spektralbereich der Röntgenstrahlung integrierten Intensitätsmuster Röntgenphotonen verschiedener Wellenlängen bei, so dass sich bei der Messung höhere Intensitäten und daher eine bessere Messstatistik ergeben.

Aus einem solchen (über einen Spektralbereich der Röntgenstrahlung integrierten) Intensitätsmuster kann dann die Ausgangsgröße bestimmt werden.

Es hat sich herausgestellt, dass ein räumlich aufgelöstes Intensitätsmuster der gestreuten Röntgenstrahlung unter Verwendung eines zumindest teilweise kontinuierlichen Spektrums zur Charakterisierung des Gefüges eines Bands oder Blechs aus Metall verwendet werden kann. Dies wird insbesondere möglich, wenn eine Fläche des Bands oder Blechs mit Röntgenstrahlung bestrahlt wird und die gestreute Strahlung räumlich aufgelöst wird. Eine Auflösung der Energie der gestreuten Strahlung ist nicht nötig.

Im Gegensatz zu einer Debye-Scherrer-Aufnahme sind bei dem gemessenen Intensitätsmuster die idealen Voraussetzungen
(a) monochromatische eingehende Röntgenstrahlung,
(b) geringe Divergenz der eingehenden Röntgenstrahlung und
(c) geringe Probendicke
typischerweise alle nicht erfüllt. Das gemessene Intensitätsmuster kann daher als stark gemittelte bzw. stark yerschmierte Debye-Scherrer-Aufnahme angesehen werden. Im Rahmen der Erfindung wurde erkannt, dass durch das Intensitätsmuster dennoch Informationen über Strukturen, insbesondere zur Orientierung und Größe der Körner bzw. Mikrokristallite in einem Gefüge zugänglich sind.

So kann die gestreute Intensität, welche an einer Position im Raum gemessen wird, dann höher sein, wenn ein Korn bzw. Mikrokristallit im Strahlengang so orientiert und so groß ist, dass der Bragg-Reflex an seiner Oberfläche im Wesentlichen in Richtung dieser Position im Raum gestreut wird. Es wurde festgestellt, dass diese korn- bzw. Mikrokristallit-abhängige Streuung sich in einer Fluktuation des Intensitätsmusters niederschlägt, deren Analyse eine Beurteilung der Korngröße, der Korngrößenverteilung und/oder der Kornorientierung des Bands oder Blechs zulässt.

Bei dem Verfahren wird eine von dem gemessenen Intensitätsmuster abhängige Ausgangsgröße bestimmt und ausgegeben und/oder das Intensitätsmuster kann einen oder mehrere Schritte der Bildbearbeitung durchlaufen.

Gemäß einer zweiten Lehre der Erfindung wird die oben genannte Aufgabe durch eine Vorrichtung zur Charakterisierung des Gefüges eines Bands oder Blechs aus Metall, insbesondere zur Verwendung in einem zuvor beschriebenen Verfahren, umfassend mindestens eine Röntgenquelle, die dazu eingerichtet ist, mit aufgeweiteter Röntgenstrahlung eine Fläche eines Bands oder Blechs zu bestrahlen, wobei die Fläche eine Größenordnung von mehreren Quadratmillimetern oder mehreren Quadratzentimetern aufweist und wobei die Röntgenstrahlung ein zumindest teilweise kontinuierlichen Spektrum aufweist, erfindungsgemäß dadurch gelöst, dass mindestens eine Detektoranordnung vorgesehen ist, die dazu eingerichtet ist, das Intensitätsmuster, das eine Vorwärtsstreuung bzw. eine Transmission der Röntgenstrahlung beinhaltet, räumlich aufzulösen, um ein räumlich aufgelöstes, über einen Spektralbereich der Röntgenstrahlung integriertes Intensitätsmuster zu erhalten, und dass mindestens eine Verarbeitungseinrichtung vorgesehen ist, die dazu eingerichtet ist, eine von der Fluktuation des gemessenen Intensitätsmusters abhängige Ausgangsgröße zur Beurteilung der Korngröße, Korngrößenverteilung und/oder Kornorientierung zu bestimmen und deren Ausgabe zu bewirken.

Die Detektoranordnung ermöglicht die räumliche Auflösung der Intensität der vom Band oder Blech gestreuten Röntgenstrahlung, so dass ein räumlich aufgelöstes Intensitätsmuster erhalten werden kann. Die Detektoranordnung ist dazu eingerichtet, ein zumindest über einen Spektralbereich integriertes, räumlich aufgelöstes Intensitätsmuster zu liefern. Insbesondere wird die Röntgenstrahlung mit der Detektoranordnung also nicht energieaufgelöst gemessen.

Da keine Energieauflösung erforderlich ist, kann zum einen eine einfachere Detektoranordnung verwendet werden. Umfasst die Detektoranordnung beispielsweise einen Festkörperdetektor, so kann ein relativ dünner Detektor eingesetzt werden. Für eine energieauflösende Messung wäre demgegenüber ein sehr großer Kristall für den Festkörperdetektor erforderlich, dessen Größe zu Lasten der Ortsauflösung geht. Damit kann vorliegend durch die fehlende Energieauflösung also auch eine bessere Ortsauflösung erreicht werden.

Weiterhin kann durch die fehlende Energieauflösung auch eine bessere Messstatistik für das Intensitätsmuster erreicht werden, da die gestreute Röntgenstrahlung über einen ganzen Spektralbereich zum Intensitätsmuster beiträgt.

Eine Verarbeitungseinrichtung zur Verarbeitung des gemessenen Intensitätsmusters ist vorgesehen, welche dazu eingerichtet ist, eine vom gemessenen Intensitätsmuster abhängige Ausgangsgröße zu bestimmen. Die Verarbeitungseinrichtung kann dazu eingerichtet sein, einen oder mehrere Werte einer Ausgangsgröße abhängig von dem Intensitätsmuster zu berechnen und deren Ausgabe zu veranlassen.

Die Vorrichtung ist insbesondere dafür eingerichtet, das zuvor beschriebene Verfahren durchzuführen. Daher wird bezüglich der Vorrichtung auf die obigen Ausführungen zu dem zuvor beschriebenen Verfahren verwiesen.

Im Folgenden werden Ausgestaltungen erläutert, welche sowohl das Verfahren als auch die Vorrichtung betreffen können. Die beschriebenen Ausgestaltungen können dabei jeweils einzeln oder in beliebiger Kombination für die Ausgestaltung des Verfahrens und der Vorrichtung herangezogen werden.

Bei dem Blech oder Band aus Metall handelt es sich vorzugsweise um ein Blech oder Band aus Aluminium oder einer Aluminiumlegierung. Ebenso ist die Verwendung des Verfahrens bei Blechen oder Bändern aus Eisen oder Kupfer oder aus einer auf einem dieser Elemente basierenden Legierung, insbesondere Stahl, vorteilhaft.

In einer Ausgestaltung wird die Intensität der vom Band oder Blech gestreuten Röntgenstrahlung mit einem Dynamikbereich gemessen, der an die Intensitätsverteilung der vom Band oder Blech gestreuten Röntgenstrahlung angepasst ist, insbesondere derart, dass an benachbarten räumlichen Positionen erfasste unterschiedliche Intensitäten verschiedene Intensitätswerte im Intensitätsmuster ergeben. Dadurch wird das Streusignal in dem gemessenen Intensitätsmuster optimal aufgelöst. Insbesondere ist es möglich, feine Intensitätsunterschiede in dem Intensitätsmuster aufzulösen, welche bisher nicht in Betracht gezogen wurden.

In einer Ausgestaltung wird die Intensität der vom Band oder Blech gestreuten Röntgenstrahlung an mehreren räumlich beabstandeten Positionen gleichzeitig gemessen. Damit kann ein räumlich aufgelöstes Intensitätsmuster zu einem bestimmten Zeitpunkt gemessen werden. Insbesondere kann damit auch eine zeitliche Auflösung des Intensitätsmusters gewonnen werden. Wird die Intensität der vom Band oder Blech gestreuten Röntgenstrahlung an mehreren räumlich beabstandeten Positionen gleichzeitig gemessen, verkürzt sich zudem die Messzeit des Intensitätsmusters.

Insbesondere werden Intensitätsmuster an beabstandeten Positionen in einer zweidimensionalen Anordnung gemessen, beispielsweise unter Verwendung einer flächigen Detektoranordnung, welche Detektorelemente in einer Fläche, beispielsweise einer Ebene oder einer gewölbten Fläche, aufweist. Dadurch kann beispielsweise das Gefüge über die Länge und/oder die Breite des Bands oder Blechs auf einfache Weise charakterisiert werden.

In einer Ausgestaltung wird ein von mindestens zwei Intensitätswerten des Intensitätsmusters abhängiger Wert einer Ausgangsgröße bestimmt. Hierzu wird insbesondere eine Auswerteeinrichtung verwendet, welche zumindest einen Speicher und einen Prozessor umfasst. Der Prozessor ist dazu eingerichtet, auf dem Speicher hinterlegte Befehle zur Berechnung eines Wertes einer Ausgangsgröße abhängig von zumindest zwei Intensitätswerten auszuführen. Es können insbesondere Parameter oder Histogramme aus dem Intensitätsmuster abgeleitet werden, welche als Ausgangsgröße ausgegeben werden. Solche Ausgangsgrößen können beispielsweise zur Beurteilung der Korngröße, Korngrößenverteilung und/oder Kornorientierung herangezogen werden.

In einer Ausgestaltung wird eine Merkmalsextraktion des Intensitätsmusters durchgeführt. Entsprechende Methoden für die Merkmalsextraktion sind dabei aus dem Stand der Technik der Bildverarbeitung und Bildauswertung bekannt, so dass diese an dieser Stelle nicht weiter erläutert werden müssen. Insbesondere kann eine Berechnung von Korrelationsfunktionen der Intensitätsmuster vorgenommen werden, wobei mit den Korrelationsfunktionen Merkmale extrahiert oder Berechnungen von Korrelationsfunktionen aus extrahierten Merkmalen vorgenommen werden können. Die Korrelationsfunktion kann für Intensitätswerte an verschiedenen räumlichen Positionen bestimmt werden. Die Bestimmung zeitlicher Korrelationsfunktionen ist ebenso denkbar.

In einer Ausgestaltung wird eine Klassifizierung anhand der durch die Merkmalsextraktion extrahierten Merkmale des Intensitätsmusters vorgenommen. Dies kann insbesondere zur Beurteilung der Korngröße, Korngrößenverteilung und/oder Kornorientierung des Bands oder Blechs ausgeführt werden. Eine Klassifizierung kann anhand einer vorgegebenen Zuordnungsvorschrift vorgenommen werden. Hierfür können statistische Methoden und/oder neuronale Netzwerke verwendet werden. Die bereits oben beschriebenen Korrelationsfunktionen können ebenfalls für eine Klassifikation herangezogen werden. Beispiele für geeignete Methoden zur Klassifizierung sind in dem Lehrbuch "Digital Image Processing, 2nd Edition" von Gonzales and Woods, Prentice-Hall (2002) beschrieben.

Zur Durchführung der Klassifizierung kann eine Vorverarbeitung und/oder eine Segmentierung des Intensitätsmusters erfolgen. Beispielsweise kann das gemessene Intensitätsmuster mit Filtern wie Kontrastfiltern vorverarbeitet werden. Eine Segmentierung kann beispielsweise durch eine Beschränkung des auszuwertenden Bereichs des Intensitätsmusters stattfinden. Insbesondere kann ein Teilabschnitt des gemessenen Intensitätsmusters ausgewertet werden, beispielsweise um einen bestimmten Abschnitt des Bands oder Blechs zu charakterisieren oder um die Ausnutzung von Rechenkapazitäten in der Verarbeitungseinrichtung zu optimieren.

Beispielsweise können als Werte für Ausgangsgrößen Korrelationsfunktionen berechnet werden, welche Informationen über die Korngröße, Korngrößenverteilung und/oder Kornorientierung enthalten. Anhand der Korrelationsfunktionen wird eine Klassifikation über Zuordnungsvorschriften vorgenommen, wobei die Zuordnungsvorschriften beispielsweise über Messreihen an Blechen oder Bändern aus Metall festgelegt werden können, deren Gefüge bekannt ist.

In einer Ausgestaltung wird das räumlich aufgelöste Intensitätsmuster anhand einer Bibliothek von Intensitätsmustern klassifiziert. Durch einen Vergleich des gemessenen Intensitätsmusters mit in einer Bibliothek hinterlegten, bereits bekannten und ausgewerteten Intensitätsmustern von Materialproben mit bestimmten Gefügen kann das gemessene Intensitätsmuster direkt klassifiziert werden. Auch hier kann eine Klassifikation hinsichtlich der Korngröße, Korngrößenverteilung und/oder Kornorientierung vorgenommen werden.

In einer Ausgestaltung wird ein bewegtes Band oder Blech untersucht, insbesondere online in einer Metallverarbeitungsanlage. Somit ist es möglich, die Charakterisierung des Gefüges eines Bands oder Blechs auch innerhalb, insbesondere online in einer Metallverarbeitungsanlage durchzuführen. Damit kann die Prozesskontrolle in der Metallverarbeitungsanlage verbessert werden, da das Gefüge des hergestellten Bands oder Blechs während, vor und/oder nach einem Fertigungsschritts zerstörungsfrei untersucht werden kann. Unter "online" wird verstanden, dass die Charakterisierung des Gefüges im laufenden Betrieb der Metallverarbeitungsanlage durchgeführt wird.

Insbesondere können das Verfahren bzw. die Vorrichtung in einer Walzstraße eingesetzt werden, wobei das Gefüge vor und/oder nach einem Walzstich charakterisiert wird. Ebenso können das Verfahren bzw. die Vorrichtung vor und/oder nach dem Durchgang durch einen Glühofen, welcher durch Einstellung einer bestimmten Temperatur ein bestimmtes Gefüge im Band bzw. Blech einstellen soll, eingesetzt werden. Das Verfahren bzw. die Vorrichtung können ebenso in eine Prozesssteuerung integriert werden, in welcher beispielsweise die Parameter eines Walzstichs und/oder einer Glühung in Abhängigkeit des Wertes der Ausgangsgröße eingestellt werden.

Das Band oder Blech kann zwischen Röntgenquelle und einer Detektoranordnung angeordnet sein, so dass im Intensitätsmuster überwiegend eine Vorwärtsstreuung bzw. Transmission der Röntgenstrahlung gemessen wird.

In einer Ausgestaltung wird die Intensität der gestreuten Röntgenstrahlung räumlich und zeitlich in Bewegungsrichtung des Bands oder Blechs aufgelöst und insbesondere ein zeitliches Aufsummieren der Intensität der von mindestens einem Bereich des Bands oder Blechs gestreuten Strahlung vorgenommen. Damit kann trotz einer hohen Geschwindigkeit des Bands oder Blechs in einer Metallverarbeitungsanlage eine ausreichende Messzeit für bestimmte Bereiche des Bands oder Blechs bereitgestellt werden. Durch diese Ausgestaltung wird die von mindestens einem Bereich des Bands oder Blechs gestreute Strahlung zeitlich mit der Bewegung des Bands oder Blechs verfolgt und kann somit zur Erhöhung der gemessenen Intensität zeitlich aufsummiert werden. Durch die Aufsummierung wird die Belichtungszeit für die Messung des räumlich aufgelösten Intensitätsmusters erhöht bzw. die erforderliche Belichtungszeit erreicht.

In einer Ausgestaltung wird die Röntgenquelle während der Messung bewegt, insbesondere gleichförmig zu der Bewegung eines bewegten Blechs oder Bands. Dadurch kann ebenfalls die Belichtungszeit für die Messung des räumlich aufgelösten Intensitätsmusters und damit die Gesamtintensität eines Messvorgangs erhöht werden. Die Röntgenquelle kann über Mittel zur Bewegung entlang des Blechs oder Bands geführt werden, bei einem bewegten Band oder Blech insbesondere gleichförmig zu dessen Bewegung, sowohl bezüglich der Bewegungsgeschwindigkeit als auch der Bewegungsrichtung. Es ist ferner möglich, die Röntgenquelle während der Messung in Bewegungsrichtung des Bands oder Blechs zu rotieren.

In einer Ausgestaltung umfasst die Detektoranordnung mehrere räumlich verteilte Detektorelemente. Dadurch kann die Detektoranordnung dazu eingerichtet werden, die Intensität der vom Band oder Blech gestreuten Röntgenstrahlung an mehreren räumlich beabstandeten Positionen gleichzeitig zu messen. Insbesondere weist die Detektoranordnung eine zweidimensionale Anordnung von Detektorelementen auf, beispielsweise eine Fläche in einer Ebene oder auch eine gewölbte Fläche. Jedes Detektorelement kann unabhängig voneinander eine Intensität messen. Die Detektoranordnung kann angrenzende oder auch beabstandete Detektorelemente aufweisen, welche durch eine Messung von Intensitäten an verschiedenen räumlichen Positionen die Erfassung des räumlich aufgelösten Intensitätsmusters ermöglichen.

In einer Ausgestaltung ist der Dynamikbereich der Detektoranordnung zur Intensitätsmessung an die Intensitätsverteilung der vom Band oder Blech gestreuten Röntgenstrahlung angepasst, insbesondere derart, dass an benachbarten räumlichen Positionen erfasste unterschiedliche Intensitäten verschiedene Intensitätswerte im Intensitätsmuster ergeben. Die bei der Charakterisierung des Gefüges auftretenden Intensitätsunterschiede im Intensitätsmuster werden damit vorteilhafterweise vollständig erfasst und können zur Auswertung verwendet werden.

Bei der Verwendung einer digitalen Detektoranordnung wird in einer Ausgestaltung die Intensität vorzugsweise mit einer Auflösung von zumindest 10 Bit erfasst, d.h. die Detektoranordnung ist dazu eingerichtet, die Intensität in mindestens 2¹⁰ Stufen, beispielsweise auf einer Skala von 0 bis mindestens 2¹⁰ -1 aufzulösen. Weiter bevorzugt beträgt die digitale Auflösung der Intensität zumindest 12 Bit, insbesondere zumindest 14 Bit.

Die zeitliche Auflösung der Detektoranordnung ist in einer Ausgestaltung kleiner als 10⁻¹ s, insbesondere unterhalb von 10⁻³ s. Unter der zeitlichen Auflösung wird die minimale Messzeit bzw. Belichtungszeit verstanden, die mit der Detektoranordnung realisierbar ist.

In einer Ausgestaltung weisen die einzelnen Detektorelemente, insbesondere Pixel, eine Fläche von höchstens 200 x 200 µm², insbesondere von höchstens 50 x 50 µm², weiter insbesondere höchstens 20 x 20 µm² auf.

Mit den genannten Größenordnungen der Auflösung der Intensität sowie der zeitlichen und räumlichen Auflösung lässt sich, einzeln oder in Kombination, das räumlich verteilte Intensitätsmuster in einem weiten Anwendungsfeld hinreichend genau bestimmen.

Die Größe der Detektorelemente bzw. der Pixel und der geometrische Projektionsfaktor bestimmen unter anderem das Auflösungsvermögen des beschriebenen Verfahrens bzw. der beschriebenen Vorrichtung hinsichtlich des Gefüges.

In einer Ausgestaltung sind Mittel zur Bewegung des Bands oder Blechs relativ zur Röntgenquelle und/oder Detektoranordnung vorgesehen, insbesondere umfassend zumindest eine Bandlaufvorrichtung oder Blechlaufvorrichtung. Die Charakterisierung des Gefüges eines Bands oder Blechs kann damit auch innerhalb einer Metallverarbeitungsanlage erfolgen. Insbesondere kann das Gefüge des hergestellten Bands oder Blechs während eines laufenden Fertigungsschrittes zerstörungsfrei untersucht werden. Das Gefüge des Bands oder Blechs kann online in einem laufenden Prozess mit der Vorrichtung charakterisiert werden. Insbesondere kann die Vorrichtung im Bereich einer Bandumlenkrolle angeordnet sein.

In einer Ausgestaltung ist die Detektoranordnung dazu eingerichtet, die Intensität der vom Band oder Blech gestreuten Strahlung räumlich und zeitlich aufzulösen, insbesondere in Bewegungsrichtung des Bands oder Blechs. Insbesondere ist ein zeitliches Aufsummieren der Intensität der von mindestens einem Bereich des Bands oder Blechs gestreuten Strahlung möglich. Damit kann trotz einer hohen Geschwindigkeit des Bands oder Blechs in einer Metallverarbeitungsanlage eine ausreichende Messzeit bzw. Belichtungszeit für bestimmte Bereiche des Bands oder Blechs bereitgestellt werden.

In einer Ausgestaltung sind Mittel zum Bewegen der Detektoranordnung und/oder der Röntgenquelle vorgesehen. Dadurch wird insbesondere eine Mitbewegung der Detektoranordnung und/oder der Röntgenquelle mit einem bewegten Band oder Blech ermöglicht, womit die Messzeit zur Aufnahme eines Intensitätsmusters erhöht werden kann. Insbesondere kann die Röntgenquelle mit der Bewegungsrichtung des Bands oder Blechs mitrotiert werden, insbesondere bei einer gleichzeitigen Bewegung der Detektoranordnung.

Ein besonders einfaches Mittel zum Bewegen der Detektoranordnung und/oder der Röntgenquelle ist durch das Verwenden eines Mittels zum Aufsetzen der Detektoranordnung oder der Röntgenquelle auf ein bewegtes Band oder Blech gegeben. Das Mittel zum Aufsetzen kann aus einem Material bestehen, welches Röntgenstrahlung nur unwesentlich absorbiert und ggf. auch beständig bei höheren Temperaturen ist. Beispielsweise kann hierfür ein Silikonkissen verwendet werden. Auf das Mittel zum Aufsetzen, beispielsweise das Silikonkissen, wird wiederum die Detektoranordnung oder die Röntgenquelle aufgesetzt.

Denkbar ist es ebenso, dass eine Bewegung von Detektoranordnung und/oder Röntgenquelle dazu genutzt wird, das Gefüge auch dreidimensional räumlich aufzulösen, beispielsweise entsprechend der Methode der Verwischungstomographie.

Gemäß einer weiteren Lehre der Erfindung wird die oben genannte Aufgabe erfindungsgemäß durch eine Metallverarbeitungsanlage, insbesondere Walzstraße zum Walzen eines Bands oder Blechs aus Metall, umfassend mindestens eine erfindungsgemäße Vorrichtung, gelöst. Bei der Metallverarbeitungsanlage kann es sich prinzipiell um eine beliebige Anlage zur Veränderung der Form oder des Gefüges von Metall handeln. Insbesondere umfasst die Metallverarbeitungsanlage eine Walzstraße mit mindestens einem Walzgerüst.

Die Metallverarbeitungsanlage kann einen Ofen zur Glühung des Bands oder Blechs aufweisen. Dabei kann die zuvor beschriebene Vorrichtung vor oder nach einem Mittel zur Umformung des Bands oder Blechs, insbesondere einem Walzgerüst angeordnet werden. Die zuvor beschriebene Vorrichtung kann vor und/oder nach einem Mittel zur Änderung des Gefüges des Bands oder Blechs, insbesondere einem Glühofen angeordnet werden. Die zuvor beschriebene Vorrichtung bzw. das zuvor beschriebene Verfahren können auch in eine Prozesssteuerung integriert werden, in welcher beispielsweise die Parameter eines Walzstichs und/oder einer Glühung in Abhängigkeit des Wertes der ermittelten Ausgangsgröße eingestellt werden.

Bezüglich weiterer Ausgestaltungen der Metallverarbeitungsanlage wird zudem auf die obigen Ausführungen zum zuvor beschriebenen Verfahren und zur zuvor beschriebenen Vorrichtung verwiesen.

Weitere Merkmale und Vorteile der vorliegenden Erfindung können auch der nachfolgenden Beschreibung mehrerer Ausführungsbeispiele entnommen werden, wobei auf die beigefügte Zeichnung Bezug genommen wird.

In der Zeichnung zeigen
- Fig. 1: eine schematische Ansicht eines ersten Ausführungsbeispiels der erfindungsgemäßen Vorrichtung,
- Fig. 2a: ein Intensitätsmuster gemessen an einem walzharten Aluminiumlegierungsblech,
- Fig. 2b: ein Intensitätsmuster gemessen an dem Aluminiumlegierungsblech aus Fig. 2a nach einem Glühen,
- Fig. 3: ein Intensitätsmuster gemessen an einem zweiten Aluminiumlegierungsblech,
- Fig. 4: ein Intensitätsmuster gemessen an einem dritten Aluminiumlegierungsblech,
- Fig. 5: eine schematische Ansicht eines Ausführungsbeispiels des erfindungsgemäßen Verfahrens,
- Fig. 6a-c: eine schematische Ansicht eines zweiten Ausführungsbeispiels der erfindungsgemäßen Vorrichtung bzw. des erfindungsgemäßen Verfahrens,
- Fig. 7a-c: eine schematische Ansicht eines dritten Ausführungsbeispiels der erfindungsgemäßen Vorrichtung bzw. des erfindungsgemäßen Verfahrens und
- Fig. 8a-c: eine schematische Ansicht eines vierten Ausführungsbeispiels der erfindungsgemäßen Vorrichtung bzw. des erfindungsgemäßen Verfahrens.

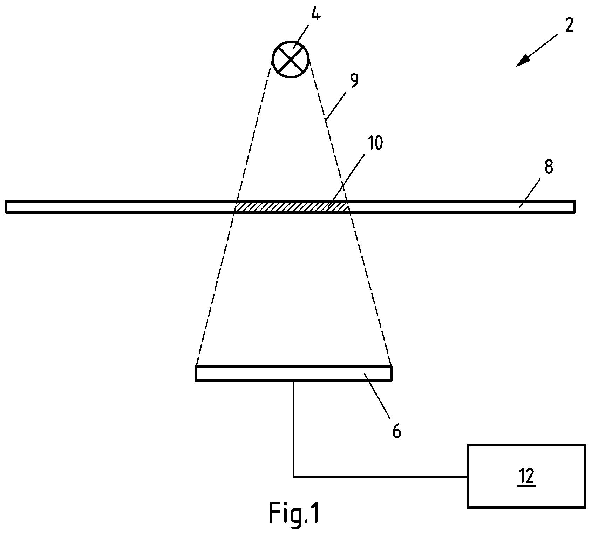

Fig. 1 zeigt eine schematische Ansicht eines ersten Ausführungsbeispiels der erfindungsgemäßen Vorrichtung 2 mit einer Röntgenquelle 4, insbesondere einer Röntgenröhre, und einer Detektoranordnung 6, insbesondere einer zweidimensionalen Detektoranordnung 6. Zwischen der Röntgenquelle 4 und der Detektoranordnung 6 ist zudem ein Blech 8 aus Metall angeordnet, dessen Gefüge mittels der Vorrichtung 2 charakterisiert werden soll.

Die Röntgenquelle 4 emittiert Röntgenstrahlung 9 mit einem zumindest teilweise kontinuierlichen Spektrum und ist dazu eingerichtet, eine Fläche des Blechs 8 zu bestrahlen. Die Detektoranordnung 6 ist dazu eingerichtet, die Intensität der vom Blech 8 gestreuten Röntgenstrahlung räumlich aufzulösen, so dass insbesondere die gestreute Strahlung des schraffiert dargestellten Volumens 10 des Blechs 8 räumlich aufgelöst wird. Die Detektoranordnung 6 misst ein räumlich aufgelöstes Intensitätsmuster, welches an eine Verarbeitungseinrichtung 12 weitergeleitet wird. Die Verarbeitungseinrichtung 12 ist dazu eingerichtet, eine vom gemessenen Intensitätsmuster abhängige Ausgangsgröße zu bestimmen und deren Ausgabe zu bewirken. Dies kann beispielsweise die Abbildung des Intensitätsmusters auf einem Bildschirm umfassen oder die Berechnung und die Ausgabe von Ausgangsgrößen aus dem Intensitätsmuster.

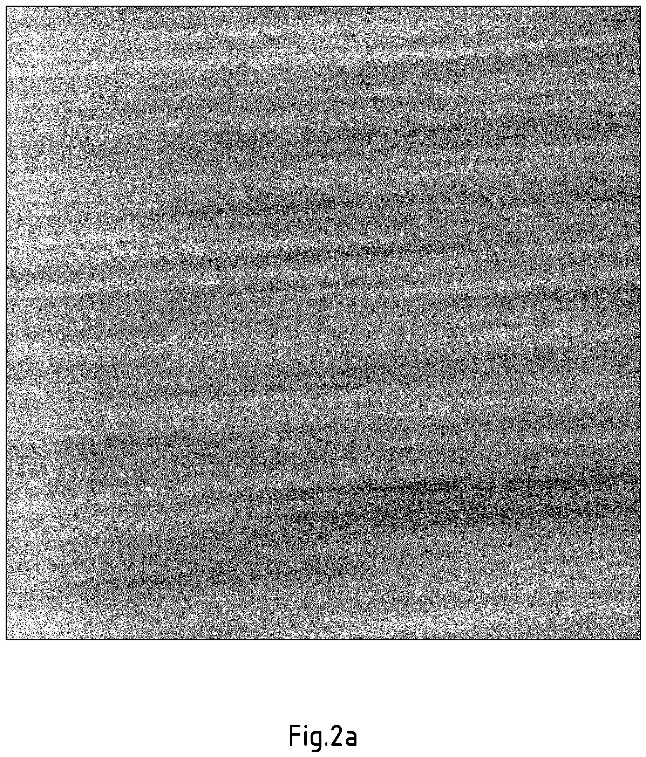

Fig. 2a zeigt ein Intensitätsmuster gemessen an einem walzharten Aluminiumlegierungsblech. Die Messung wurde mit einer wie in Fig. 1 dargestellten Vorrichtung durchgeführt, wobei sich das Blech 8 zwischen Röntgenquelle 4 und Detektoranordnung 6 befand. Das Blech 8 bestand aus einer Aluminiumlegierung des Typs Al4N (AA 1199) mit einer Dicke von 21 mm im walzharten Zustand. Der Abstand zwischen Blech 8 und Detektoranordnung 6 betrug bei der Messung 1 m. Der Abstand der Röntgenquelle 4 zum Blech 8 betrug 0,25 m.

Als Detektoranordnung wurde für die Messung ein zweidimensionaler Detektor mit einer Detektorfläche von 430 x 430 mm² und einer Pixelgröße von 148 x 148 µm² verwendet. Speziell wurde der Detektor mit der Bezeichnung Pixium RF 4343 von der Firma Thales Electron Devices S.A. (Vélizy-Villacoublay, Frankreich) verwendet. Der Detektor erlaubt damit, ein räumlich aufgelöstes Intensitätsmuster aufzunehmen. Eine Energieanalyse erfolgt nicht, so dass es sich bei der mit dem Detektor messbaren Intensitätsverteilung um eine über einen Spektralbereich der Röntgenstrahlung integrierte Intensitätsverteilung handelt. Als Röntgenquelle 4 wurde eine Röntgenröhre mit einer Molybdän-Anode verwendet. Speziell wurde die Röntgenröhre E7255 FX von der Firma Toshiba Electron Tubes & Devices Co., Ltd. (Otawara-shi, Japan) verwendet. Die Röntgenröhre wurde mit 70 kV bei 160,0 mA bei einer Messzeit von 200 ms betrieben. Die Röntgenröhre leuchtete dabei den kompletten dargestellten Bildabschnitt aus. Die im abgebildeten Intensitätsmuster sichtbare Intensität stammt von der Streuung aus dem Volumen 10 des Blechs 8 mit den Abmessungen 90 x 90 x 21 mm³.

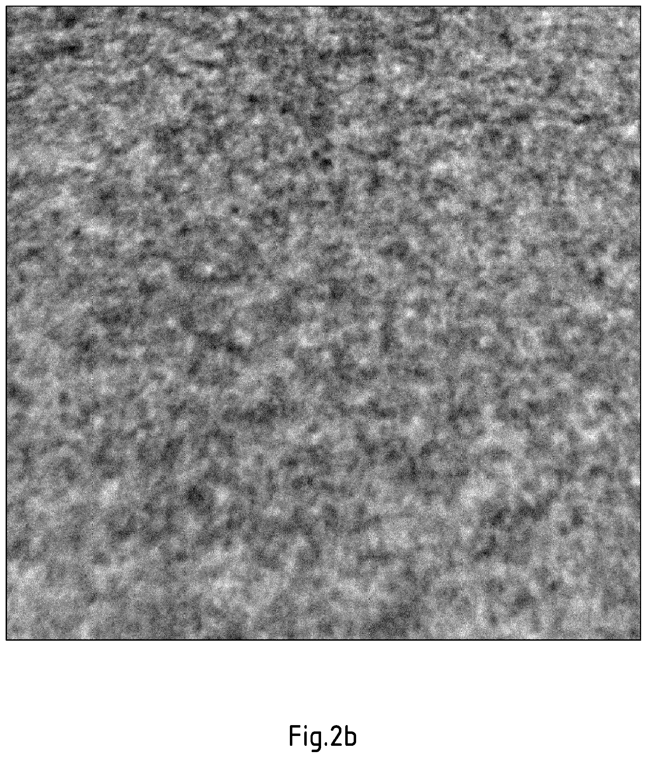

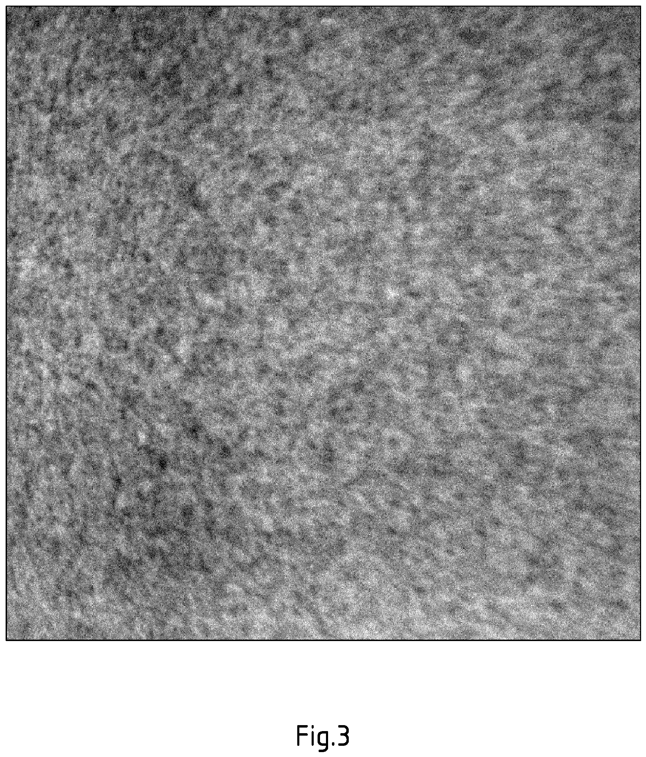

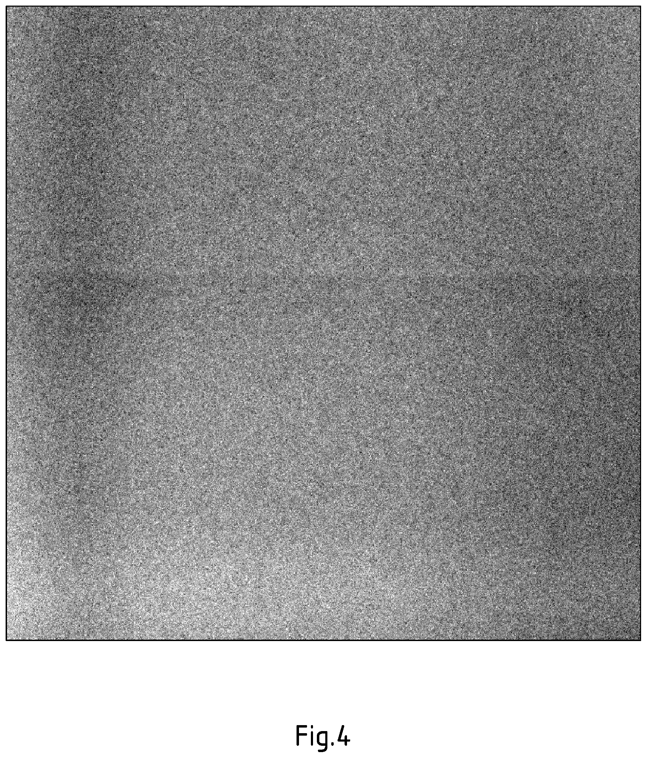

Die gemessenen Intensitätsunterschiede im räumlich aufgelösten Intensitätsmuster bzw. zwischen einzelnen Pixeln der Detektoranordnung sind im Vergleich zu dem gesamten Dynamikbereich der Detektoranordnung sehr gering. Eine Darstellung des Intensitätsmusters über den gesamten Dynamikbereich würde ein im Wesentlichen graues Bild ergeben. Daher sind die Intensitätsmuster in Fig. 2 und ebenso in den Fig. 3 und 4 durch eine entsprechende Wahl des Dynamikbereichs vorverarbeitet, um die Intensitätsunterschiede hervorzuheben. Aufgrund des geringen Kontrasts der Intensitätsunterschiede wird vorzugsweise ein an die Intensitätsverteilung angepasster Dynamikbereich der Detektoranordnung, insbesondere von mindestens 10 Bit, bevorzugt mindestens 12 Bit, besonders bevorzugt mindestens 14 Bit, verwendet.

In der Fig. 2a lassen sich sowohl eine Anisotropie als auch eine grobe Struktur im räumlich aufgelösten Intensitätsmuster erkennen. Anhand dieser Merkmale des räumlich aufgelösten Intensitätsmusters lassen sich Rückschlüsse auf das Gefüge des gemessenen Blechs ziehen. Die Anisotropie ist hierbei ein Merkmal, welches auf eine Anisotropie im Gefüge schließen lässt, beispielsweise Walzverfestigungen. Die Grobheit der Struktur des Intensitätsmusters ist wiederrum ein Merkmal, welches mit der Korngröße im Gefüge zusammenhängt. Dies wird auch anhand der nachfolgenden Figuren deutlich.

Im Fall der Fig. 2a weist die grobe, anisotrope Struktur im Intensitätsmuster auf Walzverfestigungen und eine große Korngröße im walzharten Al4N-Blech hin.

Fig. 2b zeigt zum Vergleich ein Intensitätsmuster gemessen an demselben Aluminiumlegierungsblech aus Fig. 2a, jedoch nach einem Glühen. Nach der ersten Messung, deren Intensitätsmuster in Fig. 2a dargestellt ist, wurde das Blech durch Glühen vollständig rekristallisiert. Für die in Fig. 2b dargestellte Messung wurde die Röntgenröhre mit 70 kV bei 160,0 mA bei einer Messzeit von 160 ms betrieben. Das in Fig. 2b gezeigte Intensitätsmuster wurde ansonsten unter den gleichen Bedingungen gemessen wie in Fig. 2a.

Deutlich lässt sich eine gröbere Struktur im Intensitätsmuster in Fig. 2b erkennen. Dies ist ein Merkmal, welches auf ein gröberes Gefüge des geglühten Blechs hinweist. Ebenso lässt sich erkennen, dass das Intensitätsmuster im Wesentlichen isotrop ist, woraus sich schließen lässt, dass keine gestreckten Walzverfestigungen mehr im geglühten Blech vorliegen.

Den Fig. 3 und 4 liegen ebenfalls die gleichen Messbedingungen wie bei der Messung aus Fig. 2a zugrunde, soweit nicht anders angegeben.

Fig. 3 zeigt ein Intensitätsmuster gemessen an einem zweiten Blech aus einer Aluminiumlegierung des Typs EN AW 1050 ohne Kornfeiner mit einer Dicke von 21 mm. Das Blech weist eine Korngröße von größer als 100 µm auf. Im Intensitätsmuster lässt sich entsprechend eine vergleichsweise grobe Struktur erkennen, aus der sich demnach auf die gröbere Korngröße schließen lässt.

Dagegen zeigt die Fig. 4 ein Intensitätsmuster gemessenen an einem Blech mit feinerem Gefüge mit einer Korngröße in der Größenordnung von 10 µm. Die Röntgenröhre wurde für diese Messung mit 70 kV bei 160,0 mA bei einer Messzeit von 160 ms betrieben. Fig. 4 zeigt ein Intensitätsmuster gemessen an einem dritten Blech aus einer Aluminiumlegierung ähnlich des Typs AA 3002 im geglühten Zustand. Ein Vergleich der Fig. 3 mit der Fig. 4 hebt den Unterschied in den Intensitätsmustern aufgrund der verschiedenen Gefüge, insbesondere der verschiedenen Korngrößen hervor.

Aus Intensitätsmustern, wie sie in den Fig. 2 bis 4 dargestellt sind, können nun weitere Werte von Ausgangsgrößen bestimmt werden, insbesondere abhängig von mindestens zwei Intensitätswerten des Intensitätsmusters. Insbesondere kann eine Merkmalsextraktion des Intensitätsmusters durchgeführt werden, beispielsweise eine Berechnung von räumlichen und/oder zeitlichen Korrelationsfunktionen. Eine Klassifizierung kann anhand der extrahierten Merkmale des Intensitätsmusters vorgenommen werden, insbesondere zur Beurteilung der Korngröße, Korngrößenverteilung und/oder Kornorientierung des Bands oder Blechs. Das räumlich aufgelöste Intensitätsmuster kann auch anhand einer Bibliothek von Intensitätsmustern von Proben mit bekannten Gefügen klassifiziert werden.

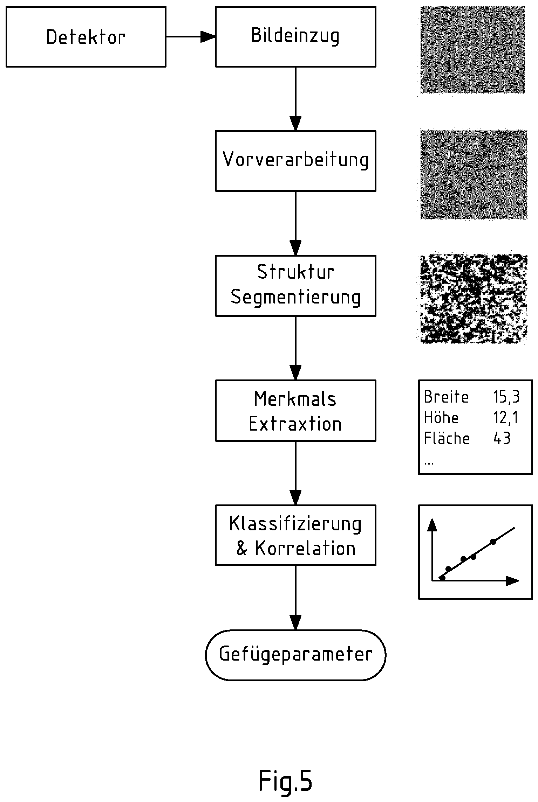

Fig. 5 zeigt ein schematisches Ablaufdiagramm eines Ausführungsbeispiels des erfindungsgemäßen Verfahrens. Zunächst wird ein räumlich aufgelöstes Intensitätsmuster mittels der Detektoranordnung 6 gemessen. Das Intensitätsmuster durchläuft anschließend mehrere aufeinanderfolgende Verfahrensschritte zur Charakterisierung des Gefüges des Blechs oder Bands aus Metall. Das Intensitätsmuster wird über einen Bildeinzug einer Vorverarbeitung zugeführt. Mit der Vorverarbeitung werden beispielsweise die Intensitäten im Intensitätsmuster skaliert oder ein Kontrastfilter angewendet. Insbesondere kann aus dem gemessenen Dynamikbereich ein Dynamikteilbereich ausgewählt und/oder verstärkt werden, um die Intensitätsunterschiede zwischen den einzelnen Pixeln des Intensitätsmusters hervorzuheben. In der anschließenden Segmentierung werden beispielsweise bestimmte Abschnitte des Intensitätsmusters ausgewählt. Darauf folgt eine Merkmalsextraktion, in welcher für das Gefüge charakterisierende Merkmale aus dem Intensitätsmuster extrahiert werden, beispielsweise die Höhe, Breite und Fläche von bestimmten Intensitätsverteilungen oder Ergebnisse von Korrelationsfunktionen. Anhand der durch die Merkmalsextraktion erhaltenen extrahierten Merkmale wird anschließend eine Klassifizierung und Korrelation durchgeführt. Insbesondere mit der Klassifizierung werden Gefügeparameter wie Korngröße, Korngrößenverteilung und/oder Kornorientierung bestimmt.

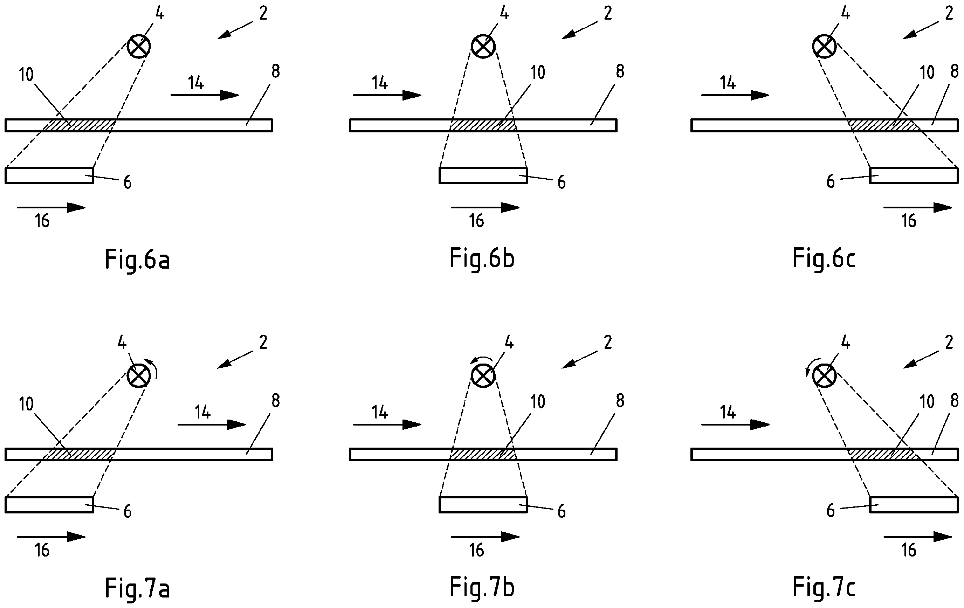

In den Fig. 6 bis 8 sind weitere Ausführungsbeispiele der erfindungsgemäßen Vorrichtung bzw. des erfindungsgemäßen Verfahrens dargestellt, insbesondere bei der Charakterisierung eines bewegten Bands oder Blechs.

Fig. 6a-c zeigen ein zweites Ausführungsbeispiel der erfindungsgemäßen Vorrichtung 2, bei welcher Mittel zum Bewegen der Detektoranordnung 6 vorgesehen sind. Ein bewegtes Band oder Blech 8 wird charakterisiert, dessen Bewegungsrichtung mit dem Pfeil 14 symbolisiert wird. Während eines Messvorgangs bewegt sich dabei die Detektoranordnung 6 gleichförmig, d.h. mit der gleichen Winkelgeschwindigkeit relativ zur Röntgenquelle 4 und mit der gleichen Richtung mit dem Band oder Blech 8. Die Bewegung der Detektoranordnung ist durch den Pfeil 16 symbolisiert und anhand der Abfolge der Fig. 6a-c illustriert, wobei die Röntgenquelle 4 feststehend dargestellt ist. Es ist auch möglich, dass Mittel zum Bewegen der Röntgenquelle 4 vorgesehen sind, welche die Röntgenquelle 4 gleichförmig zum Band oder Blech 8 bewegen. Durch die Mittel zum Bewegen und ein zeitliches Aufsummieren kann die Messzeit für einen bestimmten, hier schraffiert dargestellten Abschnitt 10 des sich bewegenden Bands oder Blechs 8 erhöht werden.

Fig. 7a-c zeigen ein drittes Ausführungsbeispiel der erfindungsgemäßen Vorrichtung 2, wobei zusätzlich zu der Anordnung aus Fig. 6 Mittel zum Bewegen der Röntgenquelle 4 vorgesehen sind. Die Röntgenquelle 4 wird während der Bewegung des Blechs oder Bands 8 und der Detektoranordnung 6 rotiert. Die Rotation wird insbesondere so ausgeführt, dass die Emissionsrichtung der maximalen Intensität der Röntgenstrahlung auf die Detektoranordnung 6 gerichtet ist.

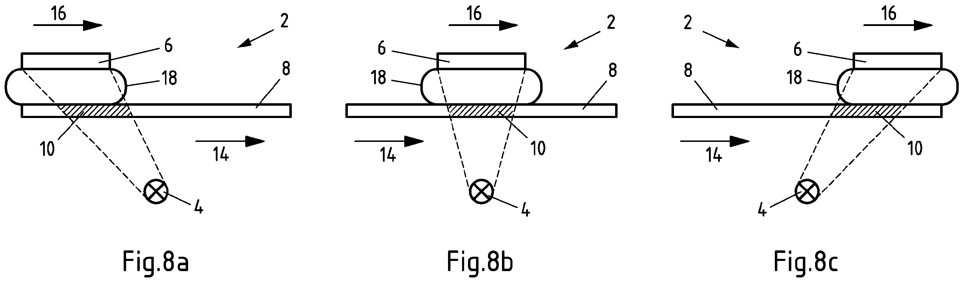

Fig. 8a-c zeigen ein viertes Ausführungsbeispiel der erfindungsgemäßen Vorrichtung 2, wobei ein Silikonkissen 18 vorgesehen ist, das auf das Band oder Blech 8 aufgelegt wird. Auf das Silikonkissen 18 wird wiederum die Detektoranordnung 6 aufgelegt und dadurch mit dem bewegten Band oder Blech 8 gleichförmig mitbewegt.

## Patentansprüche

1. Verfahren zur Charakterisierung des Gefüges eines Bands oder Blechs (8) aus Metall,
- bei dem während einer Messung eine Fläche des Bands oder Blechs (8) mit aufgeweiteter Röntgenstrahlung (9) bestrahlt wird,
- wobei die Fläche eine Größenordnung von mehreren Quadratmillimetern oder mehreren Quadratzentimetern aufweist und
- wobei die Röntgenstrahlung zumindest teilweise ein kontinuierliches Spektrum aufweist,
- bei dem das Intensitätsmuster, das eine Vorwärtsstreuung bzw. eine Transmission der Röntgenstrahlung beinhaltet, räumlich aufgelöst gemessen wird, so dass ein räumlich aufgelöstes, über einen Spektralbereich der Röntgenstrahlung integriertes Intensitätsmuster erhalten wird, und
- bei dem eine von der Fluktuation des gemessenen Intensitätsmusters abhängige Ausgangsgröße zur Beurteilung der Korngröße, Korngrößenverteilung und/oder Kornorientierung bestimmt und ausgegeben wird.

2. Verfahren nach Anspruch 1,
**dadurch gekennzeichnet,**
**dass** die Intensität der vom Band oder Blech (8) gestreuten Röntgenstrahlung mit einem Dynamikbereich gemessen wird, der an die Intensitätsverteilung der vom Band oder Blech gestreuten Röntgenstrahlung angepasst ist, insbesondere derart, dass an benachbarten räumlichen Positionen erfasste unterschiedliche Intensitäten verschiedene Intensitätswerte im Intensitätsmuster ergeben.

3. Verfahren nach Anspruch 1 oder 2,
**dadurch gekennzeichnet,**
**dass** die Intensität der vom Band oder Blech (8) gestreuten Röntgenstrahlung an mehreren räumlich beabstandeten Positionen gleichzeitig gemessen wird.

4. Verfahren nach einem der Ansprüche 1 bis 3,
**dadurch gekennzeichnet,**
**dass** ein von mindestens zwei Intensitätswerten des Intensitätsmusters abhängiger Wert einer Ausgangsgröße bestimmt wird.

5. Verfahren nach einem der Ansprüche 1 bis 4,
**dadurch gekennzeichnet,**
**dass** eine Merkmalsextraktion des Intensitätsmusters durchgeführt wird, insbesondere eine Berechnung von Korrelationsfunktionen.

6. Verfahren nach Anspruch 5,
**dadurch gekennzeichnet,**
**dass** eine Klassifizierung anhand der durch die Merkmalsextraktion extrahierten Merkmale des Intensitätsmusters vorgenommen wird, insbesondere zur Beurteilung der Korngröße, Korngrößenverteilung und/oder Kornorientierung des Bands oder Blechs (8).

7. Verfahren nach einem der Ansprüche 1 bis 6,
**dadurch gekennzeichnet,**
**dass** das räumlich aufgelöste Intensitätsmuster anhand einer Bibliothek von Intensitätsmustern klassifiziert wird.

8. Verfahren nach einem der Ansprüche 1 bis 7,
**dadurch gekennzeichnet,**
**dass** ein bewegtes Band oder Blech (8) untersucht wird, insbesondere online in einer Metallverarbeitungsanlage.

9. Verfahren nach einem der Ansprüche 1 bis 8,
**dadurch gekennzeichnet,**
**dass** die Intensität der gestreuten Röntgenstrahlung räumlich und zeitlich aufgelöst wird, insbesondere in Bewegungsrichtung (14) des Bands oder Blechs (8), und optional ein zeitliches Aufsummieren der Intensität der von mindestens einem Bereich des Bands oder Blechs (8) gestreuten Strahlung vorgenommen wird.

10. Verfahren nach einem der Ansprüche 1 bis 9,
**dadurch gekennzeichnet,**
**dass** die Röntgenquelle (4) während der Messung bewegt wird, insbesondere gleichförmig zu der Bewegung eines bewegten Blechs oder Bands (8).

11. Vorrichtung (2) zur Charakterisierung des Gefüges eines Bands oder Blechs (8) aus Metall, insbesondere zur Verwendung in einem Verfahren nach einem der Ansprüche 1 bis 10, umfassend
- mindestens eine Röntgenquelle (4), die dazu eingerichtet ist, mit aufgeweiteter Röntgenstrahlung (9) eine Fläche eines Bands oder Blechs (8) zu bestrahlen,
- wobei die Fläche eine Größenordnung von mehreren Quadratmillimetern oder mehreren Quadratzentimetern aufweist und
- wobei die Röntgenstrahlung ein zumindest teilweise kontinuierliches Spektrum aufweist,
**dadurch gekennzeichnet,**
- **dass** mindestens eine Detektoranordnung (6) vorgesehen ist, die dazu eingerichtet ist, das Intensitätsmuster, das eine Vorwärtsstreuung bzw. eine Transmission der Röntgenstrahlung beinhaltet, räumlich aufzulösen, um ein räumlich aufgelöstes, über einen Spektralbereich der Röntgenstrahlung integriertes Intensitätsmuster zu erhalten, und
- **dass** mindestens eine Verarbeitungseinrichtung (12) vorgesehen ist, die dazu eingerichtet ist, eine von der Fluktuation des gemessenen Intensitätsmusters abhängige Ausgangsgröße zur Beurteilung der Korngröße, Korngrößenverteilung und/öder Kornorientierung zu bestimmen und deren Ausgabe zu bewirken.

12. Vorrichtung nach Anspruch 11,
**dadurch gekennzeichnet,**
**dass** die Detektoranordnung (6) mehrere räumlich verteilte Detektorelemente umfasst, insbesondere in einer zweidimensionalen Anordnung.

13. Vorrichtung nach Anspruch 11 oder 12
**dadurch gekennzeichnet,**
**dass** der Dynamikbereich der Detektoranordnung (6) zur Intensitätsmessung an die Intensitätsverteilung der vom Band oder Blech (8) gestreuten Röntgenstrahlung angepasst ist, insbesondere derart, dass an benachbarten räumlichen Positionen erfasste unterschiedliche Intensitäten verschiedene Intensitätswerte im Intensitätsmuster ergeben.

14. Vorrichtung nach einem der Ansprüche 11 bis 13,
**dadurch gekennzeichnet,**
**dass** das Band oder Blech (8) zwischen Röntgenquelle (4) und Detektoranordnung (6) hindurchführbar ist.

15. Vorrichtung nach einem der Ansprüche 11 bis 14,
**dadurch gekennzeichnet,**
**dass** Mittel zur Bewegung (16) des Bands oder Blechs (8) relativ zur Röntgenquelle (4) und/oder Detektoranordnung (6) vorgesehen sind, insbesondere umfassend zumindest eine Bandlaufvorrichtung oder Blechlaufvorrichtung.

16. Vorrichtung nach einem der Ansprüche 11 bis 15,
**dadurch gekennzeichnet,**
**dass** die Detektoranordnung (6) dazu eingerichtet ist, die Intensität der vom Band oder Blech (8) gestreuten Strahlung räumlich und zeitlich aufzulösen, insbesondere in Bewegungsrichtung des Bands oder Blechs (8).

17. Vorrichtung nach einem der Ansprüche 11 bis 16,
**dadurch gekennzeichnet,**
**dass** Mittel zum Bewegen der Detektoranordnung (6) und/oder der Röntgenquelle (4) vorgesehen sind.

18. Metallverarbeitungsanlage, insbesondere Walzstraße zum Walzen eines Bands oder Blechs (8) aus Metall, umfassend mindestens eine Vorrichtung (2) nach einem der Ansprüche 11 bis 17.

## Claims

1. Method for characterising the structure of a metal strip or sheet (8),
- in which, during a measurement, a surface of the strip or sheet (8) is irradiated with expanded X-rays (9),
- said surface having a size of several square millimetres or several square centimetres, and
- wherein the X-ray radiation has at least partially a continuous spectrum,
- wherein the intensity pattern including a forward scattering or transmission of the X-ray radiation is measured in a spatially resolved manner such that a spatially resolved intensity pattern integrated over a spectral range of the X-ray radiation is obtained, and
- in which an output variable dependent on the fluctuation of the measured intensity pattern is determined and output for assessing the grain size, grain size distribution and/or grain orientation.

2. Method according to claim 1,
**characterized in**
**in that** the intensity of the X-ray radiation scattered by the strip or sheet (8) is measured with a dynamic range which is adapted to the intensity distribution of the X-ray radiation scattered by the strip or sheet, in particular in such a way that different intensities detected at adjacent spatial positions result in different intensity values in the intensity pattern.

3. Method according to claim 1 or 2,
**characterized in**
**that** the intensity of the X-ray radiation scattered by the strip or sheet (8) is measured simultaneously at several spatially spaced positions.

4. Method according to any one of claims 1 to 3,
**characterized in**
**that** a value of an output variable dependent on at least two intensity values of the intensity pattern is determined.

5. Method according to any one of claims 1 to 4,
**characterized in**
**that** a feature extraction of the intensity pattern is performed, in particular a calculation of correlation functions.

6. Method according to claim 5,
**characterized in**
**in that** a classification is carried out on the basis of the features of the intensity pattern extracted by the feature extraction, in particular for assessing the grain size, grain size distribution and/or grain orientation of the strip or sheet (8).

7. Method according to any one of claims 1 to 6,
**characterized in**
**that** the spatially resolved intensity pattern is classified using a library of intensity patterns.

8. Method according to any one of claims 1 to 7,
**characterized in**
**that** a moving strip or sheet (8) is examined, in particular online in a metal processing plant.

9. Method according to any one of claims 1 to 8,
**characterized in**
**that** the intensity of the scattered X-ray radiation is spatially and temporally resolved, in particular in the direction of movement (14) of the strip or sheet (8), and optionally a temporal summation of the intensity of the radiation scattered from at least one region of the strip or sheet (8) is performed.

10. Method according to any one of claims 1 to 9,
**characterized in**
**that** the X-ray source (4) is moved during the measurement, in particular uniformly to the movement of a moving sheet or band (8).

11. Device (2) for characterising the microstructure of a strip or sheet (8) of metal, in particular for use in a method according to any one of claims 1 to 10, comprising
- at least one X-ray source (4) adapted to irradiate with expanded X-rays (9) a surface of a strip or sheet (8),
- said surface having a size of several square millimetres or several square centimetres, and
- wherein the X-ray radiation has an at least partially continuous spectrum, **characterized in**
- **that** at least one detector arrangement (6) is provided, which is arranged to spatially resolve the intensity pattern including a forward scattering or a transmission of the X-ray radiation, respectively, in order to obtain a spatially resolved intensity pattern integrated over a spectral range of the X-ray radiation, and
- in that at least one processing device (12) is provided which is arranged to determine an output variable dependent on the fluctuation of the measured intensity pattern for assessing the grain size, grain size distribution and/or grain orientation, and to cause the output thereof.

12. Device according to claim 11,
**characterized in**
**in that** the detector arrangement (6) comprises a plurality of spatially distributed detector elements, in particular in a two-dimensional arrangement.

13. Device according to claim 11 or 12
**characterized in**
**in that** the dynamic range of the detector arrangement (6) for intensity measurement is adapted to the intensity distribution of the X-ray radiation scattered by the strip or sheet (8), in particular in such a way that different intensities detected at adjacent spatial positions result in different intensity values in the intensity pattern.

14. Device according to any one of claims 11 to 13,
**characterized in**
**in that** the strip or sheet (8) can be passed between the X-ray source (4) and the detector arrangement (6).

15. Device according to any one of claims 11 to 14,
**characterized in**
**that** means are provided for moving (16) the strip or sheet (8) relative to the X-ray source (4) and/or detector arrangement (6), in particular comprising at least one strip running device or sheet running device.

16. Device according to any one of claims 11 to 15,
**characterized in**
**in that** the detector arrangement (6) is set up to spatially and temporally resolve the intensity of the radiation scattered by the strip or sheet (8), in particular in the direction of movement of the strip or sheet (8).

17. Device according to any one of claims 11 to 16,
**characterized in**
**that** means are provided for moving the detector arrangement (6) and/or the X-ray source (4).

18. Metal processing installation, in particular rolling line for rolling a strip or sheet (8) of metal, comprising at least one device (2) according to any one of claims 11 to 17.

## Revendications

1. Procédé de caractérisation de la microstructure d'une bande ou d'une feuille (8) de métal,
- dans lequel, pendant une mesure, une surface de la bande ou de la feuille (8) est irradiée par un rayonnement X expansé (9),
- où ladite surface a un ordre de grandeur de plusieurs millimètres carrés ou de plusieurs centimètres carrés et
- où ledit rayonnement X a au moins partiellement un spectre continu,
- dans lequel le motif d'intensité comprenant une diffusion ou une transmission vers l'avant du rayonnement X est mesuré de manière résolue dans l'espace, de façon à obtenir un motif d'intensité résolu dans l'espace intégré sur une gamme spectrale du rayonnement X, et
- dans lequel une grandeur de sortie dépendant de la fluctuation du motif d'intensité mesuré est déterminée et délivrée pour évaluer la taille du grain, la distribution de la taille du grain et/ou l'orientation du grain.

2. Procédé selon la revendication 1,
**caractérisé**
**en ce que** l'intensité du rayonnement X diffusé par la bande ou la feuille (8) est mesurée avec une plage dynamique adaptée à la distribution d'intensité du rayonnement X diffusé par la bande ou la feuille, en particulier de telle sorte que des intensités différentes détectées à des positions spatiales adjacentes entraînent des valeurs d'intensité différentes dans le motif d'intensité.

3. Procédé selon l'une des revendications 1 ou 2,
**caractérisé**
**en ce que** l'intensité du rayonnement X diffusé par la bande ou la feuille (8) est mesurée simultanément en une pluralité de positions spatialement espacées.

4. Procédé selon l'une quelconque des revendications 1 à 3,
**caractérisé**
**en ce qu'**une valeur d'une grandeur de sortie dépendant d'au moins deux valeurs d'intensité du motif d'intensité est déterminée.

5. Procédé selon l'une quelconque des revendications 1 à 4,
**caractérisé**
**en ce qu'**une extraction de caractéristique du motif d'intensité est effectuée, en particulier un calcul de fonctions de corrélation.

6. Procédé selon la revendication 5,
**caractérisé**
**en ce qu'**une classification est entreprise sur la base des caractéristiques du motif d'intensité extraites par l'extraction de caractéristiques, en particulier pour évaluer la taille des grains, la distribution de la taille des grains et/ou l'orientation des grains de la bande ou de la feuille (8).

7. Procédé selon l'une quelconque des revendications 1 à 6,
**caractérisé**
**en ce que** le motif d'intensité résolu dans l'espace est classifié en utilisant une bibliothèque de motifs d'intensité.

8. Procédé selon l'une quelconque des revendications 1 à 7,
**caractérisé**
**en ce qu'**une bande ou une feuille (8) en mouvement est examinée, notamment en ligne dans une usine de traitement des métaux.

9. Procédé selon l'une quelconque des revendications 1 à 8,
**caractérisé**
**en ce que** l'intensité du rayonnement X diffusé est résolue spatialement et temporellement, en particulier dans la direction de déplacement (14) de la bande ou de la feuille (8), et de manière facultative une sommation temporelle de l'intensité du rayonnement diffusé par au moins une région de la bande ou de la feuille (8) est effectuée.

10. Procédé selon l'une quelconque des revendications 1 à 9,
**caractérisé**
**en ce que** la source de rayons X (4) est déplacée pendant la mesure, en particulier uniformément par rapport au mouvement d'une feuille ou d'une bande en mouvement (8).

11. Dispositif (2) pour la caractérisation de la microstructure d'une bande ou d'une feuille (8) de métal, en particulier pour l'utilisation dans un procédé selon l'une quelconque des revendications 1 à 10, comprenant :
- au moins une source de rayons X (4) adaptée pour irradier avec un rayonnement X expansé (9) une surface d'une bande ou d'une feuille (8),
- où ladite surface a un ordre de grandeur de plusieurs millimètres carrés ou plusieurs centimètres carrés et
- où ledit rayonnement X a un spectre au moins partiellement continu, **caractérisé**
- **en ce qu'**au moins un agencement de détection (6) est prévu, ledit agencement de détection étant agencé pour résoudre spatialement le motif d'intensité comprenant une diffusion vers l'avant ou une transmission du rayonnement X, afin d'obtenir un motif d'intensité résolu spatialement intégré sur une gamme spectrale du rayonnement X, et
- **en ce qu'**au moins un dispositif de traitement (12) est prévu, lequel dispositif de traitement étant agencé pour déterminer une grandeur de sortie dépendant de la fluctuation du motif d'intensité mesuré pour évaluer la taille des grains, la répartition de la taille des grains et/ou l'orientation des grains, et pour effectuer la délivrance de celle-ci.

12. Dispositif selon la revendication 11,
**caractérisé**
**en ce que** l'agencement de détection (6) comprend une pluralité d'éléments de détection répartis dans l'espace, en particulier dans un agencement bidimensionnel.

13. Dispositif selon l'une des revendications 11 ou 12
**caractérisé**
**en ce que** la plage dynamique de l'agencement de détection (6) pour la mesure de l'intensité est adaptée à la distribution de l'intensité des rayons X diffusés par la bande ou la feuille (8), en particulier de telle sorte que des intensités différentes détectées à des positions spatiales adjacentes entraînent des valeurs d'intensité différentes dans le motif d'intensité.

14. Dispositif selon l'une quelconque des revendications 11 à 13,
**caractérisé**
**en ce que** la bande ou la feuille (8) peut être passée entre la source de rayons X (4) et l'agencement de détection (6).

15. Dispositif selon l'une quelconque des revendications 11 à 14,
**caractérisé**
**en ce que** des moyens pour déplacer (16) la bande ou la feuille (8) par rapport à la source de rayons X (4) et/ou par rapport à l'agencement de détection (6) sont prévus, comprenant en particulier au moins un dispositif de déplacement de bande ou un dispositif de déplacement de feuille.

16. Dispositif selon l'une quelconque des revendications 11 à 15,
**caractérisé**
**en ce que** l'agencement de détection (6) est agencé pour résoudre spatialement et temporellement l'intensité du rayonnement diffusé par la bande ou la feuille (8), en particulier dans la direction de déplacement de la bande ou de la feuille (8).

17. Dispositif selon l'une quelconque des revendications 11 à 16,
**caractérisé**
**en ce que** des moyens sont prévus pour déplacer l'agencement de détection (6) et/ou la source de rayons X (4).

18. Installation de traitement de métaux, notamment ligne de laminage pour laminer une bande ou une feuille (8) de métal, comprenant au moins un dispositif (2) selon l'une quelconque des revendications 11 à 17.
